Europäisches Patentamt

European Patent Office

Office européen des brevets

(19)

(11) Veröffentlichungsnummer: **0 000 579**
**B1**

(12)

# EUROPÄISCHE PATENTSCHRIFT

(21) Anmeldenummer: 78100504.6

(22) Anmeldetag: 26.07.78

(51) Int. Cl.³: **C 08 G 18/38,**
**C 08 G 83/00, C 08 L 75/00**

(54) Verfahren zur Herstellung anorganisch-organischer Kunststoffe

(30) Priorität: 02.08.77 DE 2734691

(43) Veröffentlichungstag der Anmeldung:
07.02.79 Patentblatt 79/03

(45) Bekanntmachung des Hinweises auf die Patenterteilung:
29.10.80 Patentblatt 80/22

(84) Benannte Vertragsstaaten:
BE DE FR GB

(56) Entgegenhaltungen:
Keine

(73) Patentinhaber: BAYER AG
Zentralbereich Patente, Marken und Lizenzen
D - 5090 Leverkusen 1, Bayerwerk (DE)

(72) Erfinder: Scholl, Hans-Joachim, Dr.
Rudolf-Sohm-Strasse 28
D - 5000 Köln 60 (DE)
Dieterich, Dieter, Dr.
Ludwig-Girtler-Strasse 1
D - 5090 Leverkusen 1 (DE)
Markusch, Peter, Dr.
River View Terrace 1014
New Martinsville, W. Va. 26155 (US)

Courier Press, Leamington Spa, England.

# 0 000 579

Verfahren zur Herstellung anorganisch-organischer Kunststoffe

Anorganisch-organische Kunststoffe auf Basis von Polyisocyanaten und wäßrigen Alkalisilikatlösungen sind bekannt; vergl. z.B. DT—OS 1 770 384, 2 227 147, 2 359 606, 2 359 607, 2 359 606, 2 359 609, 2 359 610, 2 359 611, 2 359 612, DT—AS 2 325 909 und 2 310 559.

Auf diese Weise lassen sich Kunststoffe herstellen, die aufgrund der anorganischen Anteile gegenüber rein organischen Stoffen vor allem verbesserte Brandwidrigkeit aufweisen und die je nach Zusammensetzung und Reaktionsbedingungen geschäumt oder ungeschäumt, hart oder weich, spröde oder flexibel sein können. Durch die große Variabilität der Eigenschaften bieten diese anorganisch-organischen Kunststoffe ein breites Spektrum von Anwendungsmöglichkeiten.

Diesen Kombinationskunststoffen ist gemeinsam, daß zu ihrer Herstellung die organische und die anorganische Phase miteinander vermischt werden müssen. Hierbei entstehen Dispersionen vom Typ W/O (Wasser in Öl) oder O/W (Öl- in-Wasser).

Die aus einer Dispersion vom Typ W/O hervorgegangenen Kunststoffe sind besonders interessant. Sie weisen, auch unter Feuchteinwirkung, hohe mechanische Festigkeiten auf, weil die gehärtete kohärente organische Phase die ebenfalls gehärtete wäßrige anorganische inkohärente Phase umhüllt und damit fixiert. Von der perfekten kohärenten organischen Phase dieser Kunststoffe hängt aber auch, bedingt durch die eingeschlossene Wassermenge, die verbesserte Brandwidrigkeit derartiger Systeme ab.

Man hat versucht, zur Herstellung der beschriebenen Kunststoffe die Reaktionskomponenten in einer diskontinuierlich oder kontinuierlich arbeitenden Mischvorrichtung einstufig oder in mehreren Stufen miteinander zu vermischen und die entstandene Dispersion anschließend erstarren zu lassen.

Man erhält auf diese Weise indessen in der Regel Produkte, die mit zunehmendem Anteil an anorganischer Komponente in steigendem Maße ihre mechanische Festigkeit verlieren und im Extremfall sogar sandartigen Charakter und Hohlräume aufweisen. Gerade diese Produkte mit hohen anorganischen Anteilen sind jedoch aus wirtschaftlichen Gründen und wegen ihrer erhöhten Brandwidrigkeit besonders interessant.

Der Erfindung liegt die Aufgabe zugrunde, die oben beschriebenen Nachteile zu vermeiden und anorganisch-organische Kunststoffe, auch bei hohen Mengen an anorganischen Anteilen, problemlos herzustellen.

Diese Aufgabe wird mit dem erfindungsgemäßen Verfahren gelöst. Gegenstand der vorliegenden Erfindung ist ein Verfahren zur Herstellung anorganisch-organischer Kunststoffe hoher Festigkeit, Elastizität, Wärmeformbeständigkeit und Schwerentflammbarkeit bestehend aus einem als kolloids Xerosol vorliegenden Polymer-Polykieselsäuregel-Verbundmaterial durch Vermischen von

a) einem organischen Polyisocyanat,
b) einer wäßrigen Alkalisilikatlösung oder einem wäßrigen Kieselsol mit Gehalten an anorganischem Feststoff von 20—80 Gewichtsprozent,
c) Wasser, einer wäßrigen Alkalisilikatlösung und/oder einer wäßrigen Suspension von Füllstoffen mit einem Feststoffgehalt zwischen 20 und 80 Gewichtsprozent wobie die Füllstoffe zu mindestens 50 Gewichtsprozent, eine Teilchengröße von kleiner als 50 Mikron aufweisen, und gegebenenfalls zusätzlich,
d) Isocyanat-Katalysatoren und/oder e) weiteren üblichen Zusatzmitteln

und Ausreagierenlassen des so erhaltenen Gemischs, dadurch gekennzeichnet, daß die Vermischung in der Weise vorgenommen wird, daß zunächst die Komponente a) und b), gegebenenfalls unter Zusatz der ganzen Menge oder eines Teils der Komponente d) und/oder e) zu einer stabilen Primärdispersion umgesetzt und anschließend Komponente c), gegebenenfalls unter Zusatz der ganzen Menge oder eines Teils der Komponente d) und/oder e) unter Ausbildung einer Enddispersion zugegeben wird, wobei die Enddispersion vor Beginn des Aushärtens bei Raumtemperatur einen Viskositätsbereich von 600—6000 mPa s aufweist und aus 50—90 Gewichtsprozent anorganisch-wäßriger Phase und 10—50 Gewichtsprozent organischer Phase besteht.

Das erfindungsgemäße Verfahren kann kontinuierlich oder vorzugsweise diskontinuierlich durchgeführt werden. Nach der diskontinuierlichen Arbeitsweise wird zuerst die stabile Primärdispersion aus Polyisocyanat, wäßriger Alkalisilikatlösung oder wäßrigem Kieselsol und gegebenenfalls weiteren Zusatzmitteln (Komponenten d) und/oder e)) wie Aktivatoren, Emulgatoren und Treibmitteln hergestellt und dann die Zugabe der Komponente c) vorgenommen. Nach der kontinuierlichen Arbeitsweise wird entsprechend der diskontinuierlichen Arbeitsweise durch eine spezielle maschinelle Anordnung vorab die Primärdispersion in einer Vorkammer erzeugt, die Vermischung mit der Komponente c) erfolgt kontinuierlich in einem nachgelagerten Mischkopf.

Erfindungsgemäß wird eine Vermischung der einzelnen Komponenten z.B. in der Reihenfolge vorgenommen, daß räumlich und zeitlich zuerst aus den Komponenten a) und b), gegebenenfalls unter Zusatz der ganzen Menge oder eines Teils der Komponentel d) und/oder e) eine Dispersion mit Hilfe eines Mischaggregats hergestellt wird und zu dieser Dispersion in einem räumlich und zeitlich danach angeordneten Misch/aggregat die Komponente c), gegebenenfalls unter Zusatz der ganzen Menge oder eines Teils der Komponente d) und/oder e) zugegeben wird.

Als erfindungsgemäß einzusetzende Ausgangskomponenten *(Komponente a)* kommen aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise solche, wie sie in der DE - A - 2 647 482, Seiten 5—6, genannt werden.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Erfindungsgemäß besonders bevorzugt sind ionische Gruppen aufweisende Polyisocyanate, wie sie in der DE - A - 2 227 147 beschrieben werden, beispielsweise sulfonierte Polyisocyanate (DE - A - 2 227 111, 2 359 614, 2 359 615), Carboxylatgruppen aufweisende Polyisocyanate (DE - A - 2 359 613). Erfindungsgemäß bevorzugt sind auch nicht ionisch-hydrophile Polyisocyanate, wie sie in der DE - A - 2 325 909 beschrieben werden, ferner polare Gruppen aufweisende Polyisocyanate gemäß der DE - A - 2 359 608 und phenolische OH-Gruppen aufweisende Polyisocyanate, wie sie in der DE - A - 2 359 616 genannt werden.

Die obengenannten, besonders bevorzugten Polyisocyanate werden vorzugsweise aus Polyphenyl-polymethylen-polyisocyanaten, wie sie durch Anilin-Formaldehyd-Kondensation und anschließende Phosgenierung hergestellt werden ('rohes MDI') sowie aus den daraus durch Abdestillation von Zweikernprodukten erhältlichen Destillationsrückständen, die im allgemeinen eine Viskosität zwischen 5000 und 5000 000 mPa s/25°C, einem NCO-Gehalt von 28—33 Gewichtsprozent sowie eine Funktionalität >2 aufweisen, hergestellt.

Erfindungsgemäß werden ferner als Ausgangskomponenten *(Komponente b)* wäßrige Alkalisilikatlösungen oder alkalisch stabilisierte wäßrige Kieselsole mit einem Gehalt an anorganischem Feststoff von 20—80 Gew.-%. vorzugsweise 30—70 Gew.-%, eingesetzt.

Unter wäßrigen Lösungen von Alkalisilikaten sind die üblicherweise als "Wasserglas" bezeichneten Lösungen von Natrium- und/oder Kaliumsilikat in Wasser zu verstehen. Es können auch rohe technische Lösungen, welche zusätzlich z.B. Calciumsilikat, Magnesiumsilikat, Borate und Aluminate erhalten können, Verwendung finden.

Das molare Verhältnis $Me_2O/SiO_2$ (Me = Alkalimetall, z.B. Na,K.) ist nicht kritisch und kann in den üblichen Grenzen schwanken; vorzugsweise beträgt es 1:1,6 bis 1:3,3. Spielt der Wassergehalt des durch Umsetzung mit dem Polyisocyanat zunächst erhaltenen Kunststoffs eine untergeordnete Rolle, weil Wasser nicht stört oder weil es leicht durch Trocknen entfernt werden kann, so kann unbedenklich nur schwash alkalisches Natriumsilikat eingesetzt werden, von welchem sich z.B. 20—35 Gew.-%ige Lösungen herstellen lassen. Vorzugsweise werden indessen 32—54 Gew.-%ige Silikatlösungen eingesetzt, die nur bei hinreichender Alkalität die für eine problemlose Verarbeitung erforderliche Viskosität von unter 50 000 mPa s aufweisen. Auch Ammoniumsilikatlösungen, z.B. Lösungen von Guanidiniumsilikat, können verwendet werden, allerdings sind diese weniger bevorzugt. Es kann sich um echte oder auch um kolloide Lösungen handeln.

Die Wahl der Konzentration hängt vor allem vom gewünschten Endprodukt ab. Kompakte oder geschlosszellige Materialien werden vorzugsweise mit konzentrierten Silikatlösungen hergestellt, die erforderlichenfalls durch Zusatz von Alkalihydroxid auf niedrige Viskosität eingestellt werden. Auf diese Weise lassen sich 40—70 Gew.-%ige Lösungen herstellen. Andererseits werden zur Herstellung offenporiger Leichtschaumstoffe Silikatlösungen mit 30—35 Gew.-%igem Gehalt bevorzugt, um niedrige Viskositäten, ausreichend lange Reaktionszeiten und niedere Raumgewichte zu erzielen. Auch bei Einsatz feinteiliger anorganischer Füllstoffe in größeren Mengen sind Silikatlösungen von 30—35%igem Gahalt bevorzugt.

Weitere ausführliche Angaben über erfindungsgemäß brauchbare Alkalisilikatlösungen findet man bei James G. Vail 'Soluble Silicates, their properties and uses', Reinhold Publishing Corporation, New York 1952.

Die Komponente c) kann auch in einigen Fällen mit der Komponente b) identisch werden.

Als *Komponente c)* sind Wasser, eine wäßrige Alkalisilikatlösung oder eine wäßrige Suspension von Füllstoffen, die einen Feststoffgehalt zwischen 20 und 80 Gew.-% und zu mindestens 50 Gew.-% eine Teilchengröße von unter 50 Mikron (vorzugsweise 50 Gew.-% unter 10 Mikron) aufweisen, zu verstehen. Vorzugsweise kommen hier inerte mineralische Füllstoffe oder auch hydraulische mineralische Bindemittel als Füllstoffe in Frage. Sofern die trockenen Füllstoffe bereits die erfindungsgemäßen Kriterien hinsichtlich der Teilchengröße erfüllen (mindestens 50 Gew.-% kleiner als 50 Mikron), können sie unmittelbar mit Wasser zu einer Suspension angerührt werden. Sind die Teilchen

3

gröber, so kann auch eine wäßrige Grobsuspension der Füllstoffe durch bekannte Verfahren der Naßmahlung in einer erfindungsgemäß brauchbare Feinsuspension übergeführt werden.

Besonders bevorzugte wäßrige Suspensionen sind solche, welche sedimentationsstabil sind und ein viskoses zügiges Fließverhalten zeigen, wie es beispeilsweise von Papierstreichmassen bekannt ist. Zur Herstellung solcher Füllstoffsuspensionen bedient man sich daher vorteilhaft der zur Herstellung solcher Streichmassen bekannten Methoden.

Erfindungsgemäß bevorzugte stabilisierte Suspensionen sind solche, welche innerhalb von einem Tag nicht nennenswert sedimentieren und ein zügiges viskoses Fließverhalten zeigen. Im Rahmen vorliegender Erfindung gelten wäßrige Füllstoff-Suspensionen dann als 'stabilisiert', wenn die dispergierten Füllstoffe durch eine oder mehrere der nachfolgend aufgeführten Maßnahmen oder durch Mitverwendung von später im einzelnen genannten Dispergierhilfsmitteln oder Dispersionsstabilisatoren oder Verdickungsmitteln überwiegend agglomeratfrei als Einzelteilchen dispergiert sind:

1. Verwendung extrem feinteiliger Füllstoffe kleiner als 20 Mikron, mindestens 50 Gew.-% kleiner als 2 Mikron. Ganz besonders günstig sind Füllstoffe, deren Teilchengröße zu 80% zwischen 0,5 und 2 Mikron liegt, wie dies z.B. bei einer Reihe von Calciumcarbonat-Typen der Fall ist.
2. Verwendung oberflächenmodifizierter Füllstoffe, die durch die Modifizierung hydrophiliert und dadurch besser dispergierbar sind.
3. Herstellung der Dispersion unter Anwendung agglomeratzerstörender Scherkräfte, wie dies z.B. bei der Herstellung von Pigmentpasten und bei pigmentierten Lacksystem üblich ist, z.B. Abreiben auf dem Dreiwalzenstuhl, einer Sandmühle oder dergleichen.

Selbstverständlich kann die Füllstoff-Suspension auch unmittelbar vor der Zumischung hergestellt werden, z.B. indem in eine Zuleitung zum Mischraum, in dem die Vermischung des Polyisocyanats mit wäßrigem Alkalisilikat stattfindet, trockene Füllstoffe und Wasser eindosiert werden und durch eine Mischvorrichtung, z.B. eine Schnecke innerhalb dieser Zuleitung die wäßrige Füllstoff-Suspension in situ erzeugt wird.

Die Verwendung hydraulischer Bindemittel, insbesondere Zement, erfordert im allgemeinen die Suspendierung im Wasser oder wäßrigem Alkalisilikat unmittelbar vor der Verarbeitung mit der Isocyanatkomponente, damit der Abbindeprozeß und ein gegebenenfalls durch Zement verursachter Gelierungsprozeß zweckmäßigerweise im fertigen Kunststoff stattfindet.

Die eingesetzten Füllstoffsuspensionen weisen vorzugsweise eine Viskosität über 100 mPa s auf, um eine für die Verarbeitung günstiges rheologisches Verhalten zu gewährleisten. Sie sollen andererseits gut fließfähig sein und keinesfalls krümelige Konsistenz aufweisen. Vorzugsweise wird eine Viskosität von 10.000 mPa s nicht überschritten. Eine gute und sehr innige Vermischung mit dem Polyisocyanat in üblichen Verarbeitungsapparaturen sollte gewährleistet sein. Andererseits sollte der Gehalt der wäßrigen Suspension an Füllstoffen möglichst hoch sein, um nicht mehr Wasser als unumgänglich in den Kunststoff einzubringen. In Abhängigkeit von der Teilchengröße und der Gestalt der Füllstoffteilchen beträgt die Füllstoffkonzentration zwischen 20 und 80%. Bevorzugt ist ein Gehalt von 30—70%. Niedere Konzentrationen müssen im allgemeinen dann gewählt werden, wenn nichtkugelige Füllstoffe mitverwendet werden, wie z.B. Asbest, Talk, Tone oder spezielle Eisenoxide.

Erfindungsgemäß werden ferner oft Isocyanat-Katalysatoren *(Komponente d))* mitverwendet, z.B. solche, wie sie in der DE - A - 2 647 482, Seiten 13—15, beschrieben werden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München, 1966, z.B. auf den S.96 bis 102, beschrieben.

Die Katalysatoren werden in der Regel in einer Menge zwischen etwa 0,001 und 10 Gew.-%, bezogen auf die Menge an Polyisocyanat, eingesetzt.

Erfindungsgemäß können auch weitere übliche Zusatzmittel *(Komponente e))* mitverwendet werden, zu denen die nachfolgend genannten Substanzen zählen: Oberflächenaktive Zusatzstoffe wie Emulgatoren und Schaumstabilisatoren, Reaktionsverzögerer, Zellregler der an sich bekannten Art, Pigmente, Farbstoffe, Flammschutzmittel der an sich bekannten Art, ferner Stabilisatoren gegen Alterungs- und Witterungseinflüsse, Weichmacher und fungistatisch und bakteriostatisch wirkende Substanzen (vergl. hierzu z.B. DE - A - 2 647 482, Seiten 15—16), leicht flüchtige organische Substanzen als Treibmittel. Als organische Treibmittel kommen z.B. Aceton, Äthylacetat, halogensubstituierte Alkane wie Methylenchlorid, Chloroform, Äthyliden-chlorid, Vinylidenchlorid, Monofluortrichlormethan, Chlordifluormethan, Dichlordifluormethan, ferner Butan, Hexan, Heptan oder Diäthyläther in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden.

Auch das in den Komponenten b) und c) enthaltene Wasser kann die Funktion des Treibmittels übernehmen. Ferner können feine Metallpulver, z.B. Calcium, Magnesium, Aluminium oder Zink durch Wasserstoffentwicklung mit ausreichend alkalischem Wasserglas als Treibmittel dienen, wobei sie gleichzeitig eine härtende und verstärkende Wirkung ausüben.

4

Ferner gegebenenfalls folgende Zusatzmittel:

1) Dispergierhilfsmittel und Dispersionsstabilisatoren, wie Salze der Phosphorsäure, Pyrophosphorsäure, Metaphosphorsäure, Polyphosphorsäure, phosphorigen Säure, Oligokieselsäure, Polykieselsäure, Salze von organischen hochmolekularen Polysäuren, wie z.B. Poly (meth) acrylsäuren, copolymeren Poly (meth) acrylsäuren, Polymaleinsäuren, copolymeren Polymaleinsäuren, wasserlösliche Derivate der Zellulose, Stärke, Alginsäuren sowie Pflanzengummen. Auch die üblichen oberflächenaktiven Verbindungen, wie Emulgatoren, Netzmittel und Tenside kommen in Betracht.

2) Verdickungsmittel, wie Zellulosederivate, Polyacrylamid, Alginate, Pflanzengummen, wasserlösliche Polymere, z.B. Polyäthylenoxid.

3) Hoch- und niedermolekulare Di- oder Polyalkohole oder Di- bzw. Polyamine.

Besonders bevorzugt werden Suspensionen als Komponente c) die unter Zusatz von 0,05 bis 20 Gew.-%, bezogen auf Füllstoff, von einer oder mehreren der unter 1), 2) und 3) aufgeführten Zusatzmitteln hergestellt sind.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den S. 103 bis 113, beschrieben.

Die Vermischung der Reaktionskomponenten erfolgt vorzugsweise bei Raumtemperatur.

Die Wahl des Mischverfahrens hängt weitgehend von der Art der verwendeten Komponente c) ab. Nach dem diskontinuierlichen Verfahren wird dann vorzugsweise gearbeitet, wenn mit der Komponente c) folgende Füllstoffe komponente e) als wäßrige Suspensionen eingesetzt werden (da sie wäßrige Alkalisilikate z.T. spontan gelieren): Calciumhydroxid, Magnesiumhydroxid, Calciumcarbonat, Magnesiumcarbonat, Kreide, Kalk, Dolomit, Calciumsulfat, Gips und Anhydrid. Beispiele für Füllstoffe (Komponente e) in einer Suspension als Komponente c), die die Anwendung sowohl des diskontinuierlichen als auch des kontinuierlichen Verfahrens erlauben (solche, die wäßrige Alkalisilikate nicht oder nur langsam gelieren) sind z.B. Eisenoxide, Aluminiumoxide, Quarzmehl, Tone, Asbest, Gläser in Pulverform, Silikatmineralien und Wasserzemente wie Rotbandzement, schnellbindender Zement oder Tonerdeschmelzzement.

Zur Deutung der technischen Vorteile gemäß der Erfindung wird angenommen, daß die nach dem erfindungsgemäßen Verfahren zwischenzeitlich hergestellte Primärdispersion außerordentlich stabil ist und auch weitere Zusätze diesen stabilen Zustand über die Reaktions- und Aushärtungszeit hinaus nicht gefährden.

Nach dem bisherigen Stand der Technik erhält man hingegen in der Regel Dispersionen; die bei zunehmend höherem Anteil an anorganischen Komponenten unter Veränderung der W/O-Phasenstruktur instabile Dispergierungszustände durchlaufen, die nach Aushärtung Störungen im Aufbau des anorganisch-organischen Kunststoffs ergeben können, denn anorganische Substanzen können, nach herkömmlichen Mischtechniken eingebracht, Entmischungsvorgänge einleiten und dadurch die Herstellung technisch brauchbarer anorganisch-organischer Kunststoffe verhindern.

Die erfindungsgemäß herstellbaren Kunststoffe einschließlich Schaumstoffe eröffnen neue Möglichkeiten im Hoch- und Tiefbau sowie bei der Herstellung von Fertigteilen und Elementen.

Beispielhaft seien als Anwendungsmöglichkeiten die Herstellung von Wandelementen im Fertigbau, verlorene Schalungen, Rolladenkästen, Fensterbänken, Eisenbahn- und U-Bahn-Schwellen, Bordsteinen, Treppen, die Ausschäumung von Fugen sowie die Hinterschäumung von Kermikfliesen genannt.

Vorteilhaft läßt sich der Schaumbeton auch zum Binden von Kies, Marmorstücken usw. einsetzen. Man kann so dekorative Platten erhalten, wie sie beispielsweise als Fassadenelemente Verwendung finden.

Die Erfindung wird nachstehend and Hand von Beispielen näher erläutert:

## BEISPIELE
(%-Angaben sind, falls nicht anders vermerkt, Gew.-%-Angaben).

Ausgangsmaterialien:
### (1) Komponenten a)
$A_3$: Von rohem Phosgenierungsprodukt eines Anilin/Formaldehyd-Kondensats wird soviel Diisocyanato-diphenylmethan abdestilliert, daß der Destillationsrückstand bei 25°C eine Viskosität von 400 mPas aufweist. (2-Kernanteil: 45,1 Gew.-%, 3-Kernanteil:, 22,3 Gew.-%, Anteil an höherkernigen Polyisocyanaten: 32,6 Gew.-%) NCO-Gehalt: 30—31 Gew.-%.

$A_1$: Mit gasförmigem Schwefeltrioxid sulfoniertes $A_3$ (Schwefelgehalt: 0.96%, NCO-Gehalt: 30,5%, Viskosität bei 25°C: 24000 mPas, Herstellung s. DT—OS 2 227 111).

$A_2$: Entsprechend mit Chlorsulfonsäure sulfoniertes $A_3$ (Schwefelgehalt: 0.9%, NCO-Gehalt: 30,2% Viskosität bei 20°C: 2000 mPas).

*(2) Komponenten b)*

$B_1$: Natriumwasserglas, 44% Feststoff, Molgewichtverhältnis $Na_2O$ : $SiO_2$ = 1:2

$B_2$: Natriumwasserglas, 48,6% Feststoff, Molgewichtverhältnis $Na_2O$:$SiO_2$ = 1:2

*(3) Komponenten c)*

$C_1$: In 1000 g einer 54%igen Natriumsilikatlösung mit einem $SiO_2$/$Na_2O$-Verhältnis von 2,0 werden bei Raumtemperatur 1000 g eines Filterschlamms des Typs Eisenoxidschwarz 320 der Firma Bayer AG mit einem Feststoffgehalt von 62% unter einer vorherrschenden Teilchengröße von 0,2 $\mu$ (das Pigment beseitzt Kugelform) eingerührt. Die entstandene sedimentationsstabile Suspension hat folgende Zusammensetzung:

31 Gew.-% Eisenoxid
27 Gew.-% Natriumsilikat
42 Gew.-% Wasser

$C_2$: In 2,5 kg Wasser, 100 g einer 30%igen wäßrigen Lösung eines hochmolekularen Di-Kaliumsalzes eines Maleinsäure Styrol-Copolymerisats mit Carboxylat- und Sulfonatgruppen und 209 g 30%ige wäßrige Eisen (III)-chlorid-Lösung wurden 2,5 kg Weißkalkhydrat (Teilchengröße: 80% <30 $\mu$; Weißkalkhydrat der Firma Arminia-Hydroka) suspendiert. Feststoffgehalt: 47%

*(4) Komponenten e)*

$E_1$: Auf Äthylendiamin gestarteter Polypropylentetraalkohol OH-Zahl: 630

$E_2$: Auf n-Butanol gestartteter Polyäthylenoxid-monoalkohol OH-Zahl: 49,2

In den nachfolgenden Beispielen bedeuten

$t_R$ = Rührzeit (Mischzeit der Mischungen)

$t_L$ = Liegezeit, Zeitraum von Beginn des Mischens bis zum Beginn des Aufschäumens

$t_A$ = Abbindezeit, Zeitraum von Beginn des Mischens bis zur Erhärtung.

BEISPIEL 1

450 g Polyisocyanat $A_1$
85 g Trichlorfluormethan $\Big\}$ Komponenten
0,2 g Stabilisator L 5340 (Polyätherpolysiloxan der a) + e)
Fa. Union Carbide Corp.) (Mischung I)

600 g Silikatkomponente $B_1$
1 g Emulgator (Natriumsalz eines sulfochlorierten $\Big\}$ Komponenten
Paraffingemisches $C_{10}$—$C_{14}$ (50%ige wäßrige b) + e)
Lösung) (Mischung II)

300 g Wasser $\Big\}$ Komponenten c) + d) (Mischung III)
7 g Triäthylamin

Mischung I und II wurden 10 sec. mit einem Schnellrührer vorgemischt, Mischung III wurde anschließend innerhalb von 10 sec. unter Rühren zugegeben. Nach $t_R$ = 30 sec. Gesamtmischzeit wurde das Reaktionsgemisch in ein Papierpäckchen ausgegossen, begann nach $t_L$ = 40 sec. aufzuschäumen und war nach $t_A$ = 58 sec. erstarrt. Man erhielt einen harten anorganisch-organischen Schwerschaum mit den Werten:

Rohdichte [kg/m³]: 152
Druckfestigkeit [MPa]: 0,77

Vergleichsbeispiel 1a)

Gemäß Beispiel 1 wurden Mischungen II und III vorgemischt und schnell innerhalb von 5 sec. in Mischung I eingeruhrt. Nach $t_R$ = 30 sec. Mischzeit wurde das Gemisch in ein Papierpäckchen ausgegossen begann nach $t_L$ = 44 sec. aufzuschäumen und war nach $t_A$ = 68 sec. unter Ausbildung eines Hohlraums erstarrt. Man erhielt einen sandigen, inhomogenen, hohlraumhaltigen Kunststoff ohne vergleichbare Druckfestigkeit.

## BEISPIEL 2

| 400 g | Polyisocyanat $A_1$ | } | Komponenten a) + e) |
| 80 g | Trichlorfluormethan | | (Mischung I) |
| 200 g | Silikatkomponente $B_1$ | } | Komponenten b) + e) |
| 1 g | Emulgator gemäß Beispiel 1 | | (Mischung II) |
| 1000 g | Silikatkomponente $B_1$ | } | Komponenten c) + d) |
| 8 g | Triäthylamin | | (Mischung III) |

Die Verschäumung wurde gemäß Beispiel 1 durchgeführt. Man erhielt einen harten anorganisch-organischen Schwerschaum mit den Werten:

$t_R$: 30 sec., $t_L$: 37 sec., $t_A$: 54 sec.
Rohdichte [kg/m³]: 241
Druckfestigkeit [MPa]: 0,3

Vergleichsbeispiel 2a)
Vermischte man die Mischungen I, II und III aus Beispiel 2 gleichzeitig, so erhielt man innerhalb von 30 sec. Rührzeit ein hochviskoses, nicht gießbares Reaktionsgemisch ohne Aufschäumtendenz.

Vergleichsbeispiel 2b)
Vermischte man die Mischungen I, II und III aus Beispiel 2 gleichzeitig mit der Maßgabe, daß der Aktivator Triäthylamin aus Mischung III von 8 g auf 6 g reduziert wurde, so entstand nach $t_R = 20$ sec. ein gießfähiges Reaktionsgemisch, daß nach $t_L = 36$ sec. aufschäumte und nach $t_A = 72$ sec. erstarrte. Man erhielt ein sandiges, inhomogenes, wenig festes Produkt mit Hohlräumen.

## BEISPIEL 3

| 400 g | Polyisocyanat $A_1$ | } | Komponenten a) + e) |
| 80 g | Trichlorfluormethan | | (Mischung I) |
| 200 g | Silikatkomponente $B_1$ | } | Komponenten b) + e) |
| 1 g | Emulgator gemäß Beispiel 1 | | (Mischung II) |
| 600 g | Silikatkomponente $B_1$ | } | Komponenten c) + d) |
| 6 g | Triäthylamin | | (Mischung III) |

Die Verschäumung wurde gemäß Beispiel 1 durchgeführt. Man erhielt einen harten Schwerschaum mit den Werten:

$t_R$: 30 sec., $t_L$: 35 sec., $t_A$: 50 sec.
Rohdichte [kg/m³]: 213
Druckfestigkeit [MPa]: 0,48

## BEISPIEL 4

| 400 g | Polyisocyanat $A_1$ | } | Komponenten a) + e) |
| 90 g | Trichlorfluormethan | | (Mischung I) |
| 200 g | Silikatkomponente $B_1$ | } | Komponenten b) + e) |
| 1 g | Emulgator gemäß Beispiel 1 | | (Mischung II) |
| 600 g | Silikatkomponente $B_1$ | } | |
| 8 g | Triäthylamin | | |
| 40 g | Wasser | } | Komponenten c) + d) |
| 1200 g | Tonerdeschmelzzement | | (Mischung III) |
| | "Lafarge Fondu" | | |

Die Verschäumung erfolgte gemäß Beispiel 1. Man erhielt einen harten Schwerschaum mit den Werten:

$t_R$: 30 sec., $t_L$: 36 sec., $t_A$: 52 sec.
Rohdichte [kg/m³]: 406
Druckfestigkeit [MPa]: 1,37

## BEISPIEL 5

Polyisocyanat $A_1$ wurde durch Polyisocyanat $A_2$ ersetzt. Die Verschäumung erfolgte ansonsten mit den Komponenten aus Beispiel 4 gemäß Beispiel 1.

$t_R$: 30 sec., $t_L$: 37 sec., $t_A$: 67 sec.
Rohdichte [kg/m³]: 242
Druckfestigkeit [MPa]: 0,42

## BEISPIEL 6

Beispiel 5 wurde mit 75 g Trichlorfluormethan wiederholt.

$t_R$: 30 sec., $t_L$: 34 sec, $T_A$: 52 sec.
Rohdichte [kg/m³]: 383
Druckfestigkeit [MPa]: 1,09

## BEISPIEL 7

| 400 g | Polyisocyanat $A_1$ | } | Komponenten a) + e) |
| 65 g | Trichlorfluormethan | | (Mischung I) |
| | | | |
| 200 g | Silikatkomponente $B_1$ | } | Komponenten b) + e) |
| 1 g | Emulgator gemäß Beispiel 1 | | (Mischung II) |
| | | | |
| 700 g | Suspension $C_1$ | } | Komponenten c) + d) |
| 7 g | Triäthylamin | | (Mischung III) |

Die Verschäumung erfolgte gemäß Beispiel 1

$t_R$: 30 sec., $t_L$: 34 sec., $t_A$: 46 sec.
Rohdichte [kg/m³]: 273
Druckfestigkeit [MPa]: 1,02

Vergleichsbeispiel 7a)

Vermischte man die Mischungen aus Beispiel 7 gleichzeitig, so erhielt man nach 30 sec. Rührzeit ein hochviskoses, nicht gießbares Reaktionsgemisch ohne Aufschäumtendenz.

## BEISPIEL 8

| 400 g | Polyisocyanat $A_1$ | } | Komponenten a) + e) |
| 80 g | Trichlorfluormethan | | (Mischung I) |
| | | | |
| 200 g | Silikatkomponente $B_1$ | } | Komponenten b) + e) |
| 1 g | Emulgator gemäß Beispiel 1 | | (Mischung II) |
| | | | |
| 300 g | Silikatkomponente $B_1$ | } | |
| 700 g | Suspension $C_1$ | | Komponenten c) + d) |
| 7 g | Triäthylamin | | (Mischung III) |

Die Verschäumung erfolgte gemäß Beispiel 1.

$t_R$: 30 sec., $t_L$: 38 sec., $t_A$: 52 sec.
Rohdichte [kg/m³]: 370
Druckfestigkeit [MPa]: 1,21

Vergleichsbeispiel 8a)

Vermischte man die Mischungen aus Beispiel 8 gleichzeitig, so erhielt man nach $t_R$ = 20 sec. Rührzeit ein gießfähiges Reaktionsgemisch, das nach $t_L$ = 32 sec. und nach $t_A$ = 70 sec. erstarrte. Das Produkt wies Hohlräume auf und war sandig, inhomogen und wenig fest.

BEISPIEL 9

| | | |
|---|---|---|
| 400 g | Polyisocyanat $A_1$ | } Komponenten a) + e) |
| 80 g | Trichlorfluormethan | (Mischung I) |

| | | |
|---|---|---|
| 400 g | Silikatkomponente $B_1$ | } Komponenten b) + e) |
| 1 g | Emulgator gemäß Beispiel 1 | (Mischung II) |

| | | |
|---|---|---|
| 400 g | Suspension $C_2$ | } Komponenten c) + d) |
| 3,5 g | Triäthylamin | (Mischung III) |

Die Verschäumung erfolgte gemäß Beispiel 1. Man erhielt einen harten Schwerschaum mit den Werten:

$t_R$: 30 sec., $t_L$: 37 sec., $t_A$: 51 sec.
Raumgewicht [kg/m³]: 245

Vergleichsbeispiel 9a)
Versuchte man die Komponenten aus Beispiel 9 gleichzeitig zu vermischen, so trat schlagartig Gelierung des Reaktionsgemisches ein.

BEISPIEL 10

| | | |
|---|---|---|
| 100 g | Polyisocyanat $A_3$ | } Komponenten a) + b) |
| 300 g | Silikatkomponente $B_2$ | (Mischung I) |

| | | |
|---|---|---|
| 50 g | Trichlorfluormethan | |
| 25 g | Tris ($\beta$-chloräthyl)phosphat | |
| 10 g | Polyäther $E_1$ | Komponenten d) + e) |
| 5 g | Polyäther $E_2$ | (Mischung II) |
| 1 g | Stabilisator L 5340 (Polysiloxan der Fa. Union Carbide Corp.) | |
| 1 g | Dimethylbenzylamin | |

| | | |
|---|---|---|
| 200 g | Silikatkomponente $B_2$ | } Komponente c) |

Mischung I wurde 5 sec. mit einem Schnellrührer vorgemischt und anschließend 10 sec. mit Mischung II zur Primärdispersion verrührt. Nach 15 sec. Gesamtrührzeit wurde Komponente c) eingerührt. Nach $t_R$ = 30 sec. wurde das Reaktionsgemisch in ein Papierpäckchen gegossen, begann nach $t_L$ = 36 sec. aufzuschäumen und war nach $t_A$ = 130 sec. erstarrt. Man erhielt einen zäh-elastischen anorganisch-organischen Leichtschaum mit einer Rohdichte von 78 kg/m³.

Vergleichsbeispiel 10a)
Vermischte man die Komponenten gemäß Beispiel 10 gleichzeitig, so erhielt man nach 30 sec. Rührzeit ein Raktionsgemisch, das nach $t_L$ = 32 sec. aufschäumte und nach $t_A$ = 75 sec. erstarrte. Man erhielt einen Schaum mit stark gestörter Zellstruktur.

BEISPIEL 11

| | | |
|---|---|---|
| 100 g | Polyisocyanat $A_3$ | } Komponenten a) + b) |
| 200 g | Silikatkomponente $B_2$ | (Mischung I) |

| | | |
|---|---|---|
| 40 g | Trichlorfluormethan | |
| 25 g | Tris-($\beta$-chloräthyl)phosphat | Komponenten d) + e) |
| 11 g | Polyäther $E_1$ | (Mischung II) |
| 1 g | Stabilisator gemäß Beispiel 11 | |
| 1 g | Dimethylbenzylamin | |

| | | |
|---|---|---|
| 100 g | Silikatkomponente $B_2$ | } Komponente c) |

Die Vermischung und Verschäumung erfolgte gemäß Beispiel 10. Man erhielt einen zäh-elastischen Leichtschaum mit den Werten:

$t_R$: 30 sec., $t_L$: 90 sec.
Rohdichte kg/m³: 70

# 0 000 579

Vergleichsbeispiel 11a)

Vermischte man die Komponenten gemäß Beispiel 11 gleichzeitig, so erhielt man nach $t_R = 30$ sec Rührzeit ein Reaktionsgemisch, das nach 35 sec. aufschäumte und während des Aufschäumens kollabierte.

## Patentansprüche

1. Verfahren zur Herstellung anorganisch-organischer Kunststoffe hoher Festigkeit, Elastizität, Wärmeformbeständigkeit und Schwerentflammbarkeit bestehend aus einem als kolloides Xerosol vorliegenden Polymer-Polykieselsäuregel-Verbundmaterial durch Vermischen von

a) einem organischen Polyisocyanat,
b) einer wäßrigen Alkalisilikatlösung oder einem wäßrigen Kieselsol mit Gehalten an anorganischem Feststoff von 20—80 Gewichtsprozent,
c) Wasser, einer wäßrigen Alkalisilikatlösung und/oder einer wäßrigen Suspension von Füllstoffen mit einem Feststoffgehalt zwischen 20 und 80 Gewichtsprozent wobei die Füllstoffe zu mindestens 50 Gewichtsprozent, eine Teilchengröße von kleiner als 50 Mikron aufweisen, und gegebenenfalls zusätzlich
d) Isocyanat-Katalysatoren und/oder e) weiteren üblichen Zusatzmitteln

und Ausreagierenlassen des so erhaltenen Gemischs, dadurch gekennzeichnet, daß die Vermischung in der Weise vorgenommen wird, daß zunächst die Komponente a) und b), gegenbenenfalls unter Zusatz der ganzen Menge oder eines Teils der Komponente d) und/oder e) zu einer stabilen Primärdispersion umgesetzt und anschließend Komponente c), gegebenenfalls unter Zusatz der ganzen Menge oder eines Teils der Komponente d) und/oder e) unter Ausbildung einer Enddispersion zugegeben wird, wobei die Enddispersion vor Beginn des Aushärtens bei Raumtemperatur einen Viskositätsbereich von 600—6000 mPa s ausweise und aus 50—90 Gewichtsprozent anorganisch-wäßriger Phase und 10—50 Gewichtsprozent organischer Phase besteht.

2. Verfahren gemäß Anspruch 1, dadurch gekennzeichnet, daß man als Alkalisilikat Natriumsilikat mit einem $Na_2O:SiO_2$-Molverhältnis im Bereich von 1:1,6 bis 3,3 verwendet.

3. Verfahren gemäß Anspruch 1—2, dadurch gekennzeichnet, daß als organische Polyisocyanate Phosgenierungsprodukte der Anilin/Formaldehyd-Kondensation eingesetzt werden.

4. Verfahren nach Anspruch 1—3, dadurch gekennzeichnet, daß man als Polyisocyanat ein Ionengruppen aufweisendes Polyisocyanat verwendet.

5. Verfahren nach Anspruch 4, dadurch gekennzeichnet, daß das Ionengruppen aufweisende Polyisocyanat ein Sulfonsäure- und/oder Sulfonatgruppen aufweisendes Polyisocyanat ist.

6. Verfahren gemäß Anspruch 1 und 2, dadurch gekennzeichnet, daß als Polyisocyanat ein endständige Isocyanatgruppen aufweisendes nicht-ionisch hydrophile Gruppen enthaltendes Präpolymer eingesetzt wird.

## Revendications

1. Procédé de production de matières plastiques inorganiques-organiques ayant de bonnes propriétés de résistance, d'élasticité, de stabilité dimensionnelle et de difficulté d'inflammabilité, constituées par une matière composite polymère-gel de poly-acide silicique sous la forme d'un xérosol colloîdal, par mélange:

a) d'un polyisocyanate organique,
b) d'une solution aqueuse d'un silicate alcalin ou d'un sol aqueux de silice ayant une teneur en matière solide inorganique de 20 à 80% en poids,
c) d'eau, d'une solution aqueuse de silicate alcalin et/ou d'une suspension aqueuse de charges ayant une teneur en matières solides de 20 à 80% en poids, les charges présentant en proportion d'au moins 50% en poids une grosseur de particules de moins de 50 micromètres, et en outre, le cas échéant,
d) de catalyseurs de type isocyanate et/ou
e) d'autres additifs classiques,

et en faisant réagir totalement le mélange ainsi obtenu, caractérisé en ce que l'opération de mélange est conduite de sorte que l'on fait réagir tout d'abord les composants a) et b), le cas échéant avec addition de la quantité totale ou d'une partie du composant d) et/ou du composant e) pour obtenir une dispersion primaire stable, puis on ajoute le composant c), en ajoutant éventuellement la quantité totale ou une partie du composant d) et/ou composant e) en formant ainsi une dispersion finale qui présente, avant le début du durcissement â la température ambiante, une plage de viscosité de 600 à 6000 mPa.s et qui comprend 50 à 90% en poids de phase inorganique-aqueuse et 10 à 50% en poids de phase organique.

10

2. Procédé suivant la revendication 1, caractérisé en ce qu'on utilise comme silicate de métal alcalin un silicate de sodium ayant un rapport molaire $Na_2O:SiO_2$ compris dans la plage de 1:1,6 à 3,3.

3. Procédé suivant l'une des revendications 1 et 2, caractérisé en ce qu'on utilise comme polyisocyanates organiques des produits de phosgénation de la condensation entre aniline et formaldéhyde.

4. Procédé suivant les revendications 1 à 3, caractérisé en ce qu'on utilise comme polyisocyanate un polyisocyanate présentant des groupes ioniques.

5. Procédé suivant la revendication 4, caractérisé en ce que le polyisocyanate présentant des groupes ioniques est un polyisocyanate présentant des groupes acide sulfonique et/ou des groupes sulfonate.

6. Procédé suivant l'une des revendications 1 et 2, caractérisé en ce qu'on utilise comme polyisocyanate un prépolymère présentant des groupes isocyanate terminaux et renfermant des groupes hydrophiles non ioniques.

**Claims**

1. Process for the preparation of inorganic/organic plastics which have a high strength, elasticity and heat distortion point and very low inflammability and consist of a polymer/polysilicic acid composite material present as a colloidal xerosol, by mixing

a) an organic polyisocyanate,
b) an aqueous alkali metal silicate solution or an aqueous silica sol, containing 20—80 per cent by weight of inorganic solids,
c) water, an aqueous alkali metal silicate solution and/or an aqueous suspension of fillers with a solids content between 20 and 80 per cent by weight, at least 50 per cent by weight of the fillers having a particle size of less then 50 microns, and optionally also
d) isocyanate catalysts and/or e) other customary additives, and allowing the mixture thus obtained to react, characterised in that mixing is carried out in a manner such that components a) and b), optionally with the addition of all or some of components d) and/or e), are reacted to form a stable primary dispersion and component c), optionally with the addition of all or some of components d) and/or e), is then added to form a final dispersion, the final dispersion having a viscosity range of 600—6,000 mPas at room temperature before the start of hardening and consisting of an inorganic aqueous phase to the extent of 50—90 per cent by weight and an organic phase to the extent of 10—50 per cent by weight.

2. Process according to Claim 1, characterised in that sodium silicate with a molar ratio of $Na_2O:SiO_2$ in the range from 1:1.6 to 3.3 is used as the alkali metal silicate.

3. Process according to Claims 1—2, characterised in that products obtained by phosgenation of the aniline/formaldehyde condensation products are employed as the organic polyisocyanates.

4. Process according to Claims 1—3, characterised in that a polyisocyanate which contains ionic groups is used as the polyisocyanate.

5. Process according to Claim 4, characterised in that the polyisocyanate containing ionic groups is a polyisocyanate containing sulphonic acid groups and/or sulphonate groups.

6. Process according to Claims 1 and 2, characterised in that a prepolymer which contains nonionic hydrophilic groups and has isocyanate end groups is employed as the polyisocyanate.